# EUROPÄISCHE PATENTANMELDUNG

(11) **EP 0 964 239 A2**
(43) Veröffentlichungstag der Anmeldung: **15.12.1999**
(21) Anmeldenummer: 99109248.7
(22) Anmeldetag: 25.05.1999
(51) Int. Cl.: G01M 17/007

(54) **Simulationsanordnung für Kraftfahrzeugunfälle und Verfahren zur Simulation von Kraftfahrzeugunfällen**

(30) Priorität: 12.06.1998 DE 19826288
(71) Anmelder: Volkswagen Aktiengesellschaft, 38436 Wolfsburg (DE)
(72) Erfinder: Bloch, Willi, 38458 Velpke (DE); Weiser, Florian, Dr., 38468 Ehra-Lessien (DE)

(57) **Zusammenfassung**

Die vorliegende Erfindung betrifft eine Simulationsanordnung für Kraftfahrzeugunfälle mit einer Fahrbahn (10), auf der wenigstens ein Crashfahrzeug (12) auf einen Kollisionspunkt (14) mit einem Hindernis (16) oder einem anderen Fahrzeug zubewegbar ist, wobei Leuchtmittel zum Ausleuchten eines Kollisionsbereiches des Kollisionspunktes (14) vorgesehen sind. Hierbei ist wenigstens ein Leuchtmittel (22, 24, 26, 28) auf wenigstens einer Diagonale (19) zu einer Hauptbewegungsachse (18) des Crashfahrzeuges (12) vor und/oder hinter dem Kollisionspunkt (14) angeordnet und auf den Kollisionsbereich hin ausgerichtet angeordnet, wobei die Diagonale (19) das Crashfahrzeug (12) in dessen Position am Kollisionspunkt (14) und/oder das Hindernis (16) bzw. Fahrzeug schneidet.

## Beschreibung

Die Erfindung betrifft eine Simulationsanordnung für Kraftfahrzeugunfälle mit einer Fahrbahn, auf der wenigstens ein Crashfahrzeug auf einen Kollisionspunkt mit einem Hindernis oder einem anderen Fahrzeug zubewegbar ist, wobei Leuchtmittel zum Ausleuchten eines Kollisionsbereiches des Kollisionspunktes vorgesehen sind, gemäß dem Oberbegriff des Anspruchs 1. Die Erfindung betrifft ferner ein Verfahren zur Simulation von Kraftfahrzeugunfällen, wobei wenigstens ein Crashfahrzeug auf einer Fahrbahn auf einen Kollisionspunkt mit einem Hindernis oder einem anderen Fahrzeug zubewegt wird, gemäß dem Oberbegriff des Anspruchs 11.

Aus der EP 0 445 671 A1 ist eine Vorrichtung und ein Verfahren zum Überprüfen von Wirkungen eines Kraftfahrzeugunfalls bekannt. Derartige Verfahren werden herkömmlicherweise auch als Crashtest bezeichnet. Hierbei wird wenigstens ein Kraftfahrzeug an einen vorher definierten Kollisionspunkt mit seinem eigenen Antrieb geführt. Üblicherweise sind speziell für den Bereich des Kollisionspunktes oder Crashpunktes von einer Hallendecke herabhängende Beleuchtungsvorrichtungen vorgesehen, welche diesen Bereich mit ausreichend Licht für Hochgeschwindigkeitskameras entweder vollflächig von oben oder als Direktbeleuchtung von oben und schräg seitlich oben (i.a. in Fahrtrichtung des/der Fahrzeuge gesehen) ausleuchten.

Zusätzlich kommen Reflexbeschichtungen oder auch Scheinwerfer im Bodenbereich zum Einsatz, die für eine Aufhellung des Fahrzeuginneren und hier insbesondere der Köpfe von Dummy-Insassen sorgen sollen, die sich bezüglich der Hauptbeleuchtung von oben in einem Abschattungsbereich der Fahrzeugdachkantenstrukturen befinden.

Als Lampenkörper kommen häufig Parabolreflektoren und Reflektorwannen zum Einsatz, die entweder das Fahrzeug direkt beleuchten oder zur Aufweichung der Lichtcharakteristik in Lichtwannen mit vorgespannten Diffusoren (Folien, Raster) montiert sind. Als Leuchtmittel werden entweder Gleichstrom- oder direkt am Wechselstromnetz betriebene Halogen-Glühwendel-Lampen oder mit speziellen Vorschaltgeräten betriebene Halogen-Gasentladungslampen zum Erzeugen eines flackerfreien Lichtstroms verwendet.

Eine optimale Ausleuchtung des Crashgeschehens wird jedoch erheblich dadurch erschwert, daß die Vorgänge mit Hochgeschwindigkeitskameras aufgezeichnet werden, die sich zumeist als Übersichtskameras in Fahrtrichtung gesehen seitlich links und seitlich rechts relativ weit vom Fahrzeug entfernt befinden. Zusätzlich kommen auch Kameras direkt von oben, von schräg oberhalb eines Aufprallblockes und aus solchen seitlichen Positionen zum Einsatz, aus denen die Vorgänge im Armaturenbrett- und Kniebereich erfaßt werden, also in Fahrtrichtung gesehen von schräg oben seitlich relativ nahe an der Crashposition des Fahrzeugs.

Die von den Kamerapositionen ausgehende Problematik besteht zum einen darin, daß seitlich montierte Scheinwerfergruppen nicht tief genug positioniert werden können, um eine zufriedenstellende Ausleuchtung des Fahrzeuginnenraumes zu gewährleisten, da ansonsten die gegenüberstehenden seitlichen Kameras geblendet würden. Zum anderen ist die tiefste seitliche Scheinwerferposition nicht besetzbar, welche gerade noch Blendfreiheit für die gegenüber angeordneten Kameras gewährleisten würde, da wegen der gewölbten seitlichen Karosserie- und Scheibenstrukturen der Fahrzeuge erhebliche Reflexionen der Scheinwerfer auf die Kamerastandpunkte der jeweils gleichen Seite auftreten. Diese Reflexionen machen sich um so störender bemerkbar, je höher die Leuchtdichte der einzelnen Scheinwerfer ist. Jedoch führt auch eine konsequente Verringerung der Leuchtdichte durch Einsatz von Lichtwannen nicht zur gewünschten reflexionsarmen Ausleuchtungsqualität.

Werden die seitlichen Scheinwerfer so hoch positioniert, daß keine Reflexionen mehr in Richtung der seitlichen Scheinwerfer auftreten, ist zum einen mit Reflexionen in Richtung der Übersichtskamera von oben und über die Frontscheibe in Richtung der schräg von vorn eingesetzten Kamera zu rechnen. Zum anderen ist die Fahrzeuginnenausleuchtung nicht mehr gewährleistet, so daß Zusatzscheinwerfer tief am Boden oder sogar im Boden eingelassen erforderlich werden. Da auch hier wieder eine so tiefe Position eingehalten werden muß, daß keine Reflexion in Richtung der seitlichen Kameras auftritt, kann zwar eine Aufhellung der außermittigen Fahrzeugteile und Insassen erreicht werden, die Ausleuchtung der mittleren Sitzpositionen bleibt jedoch mangelhaft. Darüber hinaus muß aus dieser Scheinwerferposition während des Crashversuches so lange eine Blendung der gegenüberstehenden Kameras in Kauf genommen werden, bis alle Scheinwerfer durch das sich in den Strahlengang bewegende Fahrzeug verdeckt sind. Dies ist insbesondere bei digitalen Kameras nachteilig, da hier durch einen sogn. Blooming-Effekt eine mehr oder minder lange Erholzeit bis zum Wiedererreichen einer optimalen Aufzeichnungsqualität auftritt, die durchaus die interessantesten Zeitbereiche des gesamten Crashversuches überdecken kann.

Ein erheblicher Nachteil von seitlich im Bodenbereich angebrachten Scheinwerfern besteht darin, daß zum einen die Zugänglichkeit in der Versuchsvor- und -nachbereitungsphase eingeschränkt wird, zum anderen die Scheinwerfer bei bestimmten Versuchsarten (z.B. Offset- und Winkelcrashs) einer starken Zerstörungsgefahr durch das sich in einer Reboundphase seitlich zurückbewegende Fahrzeug ausgesetzt sind. Diese Nachteile können zwar durch Einlassen der Scheinwerfer in den Boden und Abdecken mit Klar- oder Milchglas vermieden werden, jedoch bleibt neben der erwähnten Ausleuchtungsunzulänglichkeit der Wartungsaufwand durch den regelmäßig notwendigen Austausch der i.a. vorzusehenden Verschleißschutzschicht.

Reflexbeschichtungen im Bodenbereich zur Aufhellung des Fahrzeuginnenraums sind im einfachsten Fall eine weiß gestrichene Fläche und haben einen relativ schlechten Wirkungsgrad, der auch nur mit entsprechender Pflege aufrechterhalten werden kann (Säuberung von Verschmutzungen, Ausbesserung). Reflexfolien haben einen erheblich höheren Wirkungsgrad, müssen aber entweder mechanisch geschützt werden, was den Wirkungsgrad wieder entsprechend herabsetzt, oder häufig mit entsprechendem Aufwand ersetzt werden. Der beleuchtungstechnische Aufwand zur Ausnutzung von Bodenreflexionen der einfachen Art ist unverhältnismäßig hoch und bei Beleuchtungsstärken z.B. im Bereich von 100.000 bis 200.000 lux nicht mehr realisierbar. Eine Blendung der Deckenübersichtskamera ist unvermeidlich.

Im Crashfahrzeug mitfahrende Beleuchtung zur Aufhellung des Fahrzeuginnenraums und der darin befindlichen Dummy-Insassen führt zu guten beleuchtungstechnischen Resultaten, ist jedoch mit erheblichem Aufwand bei der Ausrüstung der Fahrzeuge verbunden.

Der vorliegenden Erfindung liegt daher die Aufgabe zugrunde, eine Simulationsanordnung der o.g. Art und ein Verfahren der o.g. Art zur Verfügung zu stellen, wobei die obengenannten Nachteile überwunden werden und eine reflexarme, homogene Ausleuchtung von Crashfahrzeugen und Innenteilen, wie beispielsweise Dummy-Insassen, für Hochgeschwindigkeitskameras gewährleistet ist.

Diese Aufgabe wird erfindungsgemäß durch eine Simulationsanordnung der o.g. Art mit den in Anspruch 1 gekennzeichneten Merkmalen und durch ein Verfahren der o.g. Art mit den in Anspruch 11 gekennzeichneten Merkmalen gelöst. Vorteilhafte Ausgestaltungen der Erfindung sind in den abhängigen Ansprüchen angegeben.

Dazu ist es bei einer Simulationsanordnung erfindungsgemäß vorgesehen, wenigstens ein Leuchtmittel auf wenigstens einer Diagonale zu einer Hauptbewegungsachse des Crashfahrzeuges vor und/oder hinter dem Kollisionspunkt zuzuordnen und auf den Kollisionsbereich hin auszurichten, wobei die Diagonale das Crashfahrzeug in dessen Position am Kollisionspunkt und/oder das Hindernis bzw. Fahrzeug schneidet.

Dies hat den Vorteil, daß eine abschattungsarme, blendfreie Fahrzeugausleuchtung im gesamten Fahrzeughochbereich und Fahrzeuglängsbereich ohne Reflexionen in Richtung aller Kamerastandorte, ohne Beeinträchtigung von Crash-Vorbereitungsarbeiten oder Crash-Nachbereitungsarbeiten bei gleichzeitig freier Sicht von seitlich angeordneten Zuschauertribünen auf das Crashgeschehen erzielt wird.

Zur Gewährleitung einer guten Kopfausleuchtung ist das wenigstens eine Leuchtmittel in einer Höhe von 0 cm bis 150 cm, insbesondere 120 cm, über der Fahrbahn angeordnet.

Zweckmäßigerweise schließt die wenigstens eine Diagonale einen Winkel von 40 Grad bis 50 Grad, insbesondere 45 Grad, mit der Hauptbewegungsachse des Crashfahrzeuges ein.

Eine besonders gute Ausleuchtung des Crashfahrzeug-Innenraumes mit minimalen Abschattungen durch A-, B- oder C-Säulen erzielt man dadurch, daß die wenigstens eine Diagonale das Crashfahrzeug in dessen Position am Kollisionspunkt mittig schneidet, wobei in besonders vorteilhafter Weise jeweils wenigstens ein Paar Leuchtmittel an gegenüberliegenden Enden einer Diagonale vor und hinter dem Kollisionspunkt angeordnet ist.

Abschattungen durch A-, B- bzw. C-Säulen des Fahrzeuges in dessen Innenraum werden in vorteilhafter Weise weiter dadurch vermieden, daß das Leuchtmittel mehrere, individuell einstellbare Beleuchtungskörper umfaßt.

Reflexionen von Grenzkantenbereichen einer Karosserie des Fahrzeugs lassen sich dadurch vermeiden, daß wenigstens ein Leuchtmittel in zwei horizontale Paneele geteilt ist.

Eine zusätzliche Fahrzeug-Dachflächen- und Motorhaubenausleuchtung erzielt man dadurch, daß oberhalb und/oder schräg seitlich bezüglich des Kollisionspunktes zusätzliche Leuchtmittel angeordnet sind.

Für eine optimale Ausleuchtung eines von einer Kamera beobachteten Bereiches eines Fahrzeuginnenraumes ist für eine schräg seitlich von oben in den Fahrzeuginnenraum blickende Kamera wenigstens ein Leuchtmittel seitlich oberhalb dieser Kamera und bzgl. dieser seitlich versetzt und in Richtung eines Kamerablickwinkels ausgerichtet angeordnet.

Zur flexiblen Anpassung an unterschiedliche Crashtestanordnung ist wenigstens eines der Leuchtmittel in seiner Position verfahrbar angeordnet.

Bei einem Verfahren der o.g. Art ist es erfindungsgemäß vorgesehen, daß der Kollisionspunkt diagonal zu einer Hauptbewegungsachse des Crashfahrzeuges vor und/oder hinter dem Kollisionspunkt von wenigstens einem Leuchtmittel ausgeleuchtet wird.

Dies hat den Vorteil, daß eine abschattungsarme, blendfreie Fahrzeugausleuchtung im gesamten Fahrzeughochbereich und Fahrzeughängsbereich ohne Reflexionen in Richtung aller Kamerastandorte, ohne Beeinträchtigung von Crash-Vorbereitungsarbeiten oder Crash-Nachbereitungsarbeiten bei gleichzeitig freier Sicht von seitlich angeordneten Zuschauertribünen auf das Crashgeschehen erzielt wird.

Abschattungen durch A-, B- bzw. C-Säulen des Fahrzeuges in dessen Innenraum werden in vorteilhafter Weise dadurch vermieden, daß wenigstens ein Leuchtmittel mit mehreren Beleuchtungskörpern verwendet wird, wobei die Beleuchtungskörper derart eingestellt werden, daß sich deren Lichtverteilungskurven in einem Zielbereich überschneiden.

Eine entsprechende Anpassung der Lichtverteilungscharakteristik erzielt man dadurch, daß wenigstens vor einem Beleuchtungskörper eine Vorsatzlinse angeordnet wird.

Eine zusätzliche Fahrzeug-Dachflächen- und Motorhaubenausleuchtung erzielt man dadurch, daß der Kollisionspunkt zusätzlich von oberhalb und/oder schräg seitlich ausgeleuchtet wird.

Zur Gewährleitung einer guten Kopfausleuchtung wird das wenigstens eine Leuchtmittel in einer Höhe von 0 cm bis 150 cm, insbesondere 120 cm, über der Fahrbahn angeordnet.

Zweckmäßigerweise schließt eine Ausleucht-Diagonale einen Winkel von 40 Grad bis 50 Grad, insbesondere 45 Grad, mit der Hauptbewegungsachse des Crashfahrzeuges ein.

Eine besonders gute Ausleuchtung des Crashfahrzeug-Innenraumes mit minimalen Abschattungen durch A-, B- oder C-Säulen erzielt man dadurch, daß die wenigstens eine Ausleucht-Diagonale das Crashfahrzeug in dessen Position am Kollisionspunkt mittig schneidet, wobei in besonders vorteilhafter Weise jeweils wenigstens ein Paar Leuchtmittel an gegenüberliegenden Enden einer Diagonale vor und hinter dem Kollisionspunkt angeordnet ist.

Eine zusätzliche Fahrzeug-Dachflächen- und Motorhaubenausleuchtung erzielt man dadurch, daß der Kollisionsbereich zusätzlich von oberhalb und/oder schräg seitlich bezüglich des Kollisionspunktes ausgeleuchtet wird.

Für eine optimale Ausleuchtung eines von einer Kamera beobachteten Bereiches eines Fahrzeuginnenraumes wird der Kollisionsbereich zusätzlich von seitlich oberhalb und seitlich versetzt einer schräg seitlich von oben in den Fahrzeuginnenraum blickenden Kamera aus ausgeleuchtet.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine schematische Aufsicht einer bevorzugten Ausführungsform einer erfindungsgemäßen Simulationsanordnung,
- Fig. 2: eine schematische Seitenansicht einer bevorzugten Ausführungsform einer erfindungsgemäßen Simulationsanordnung.

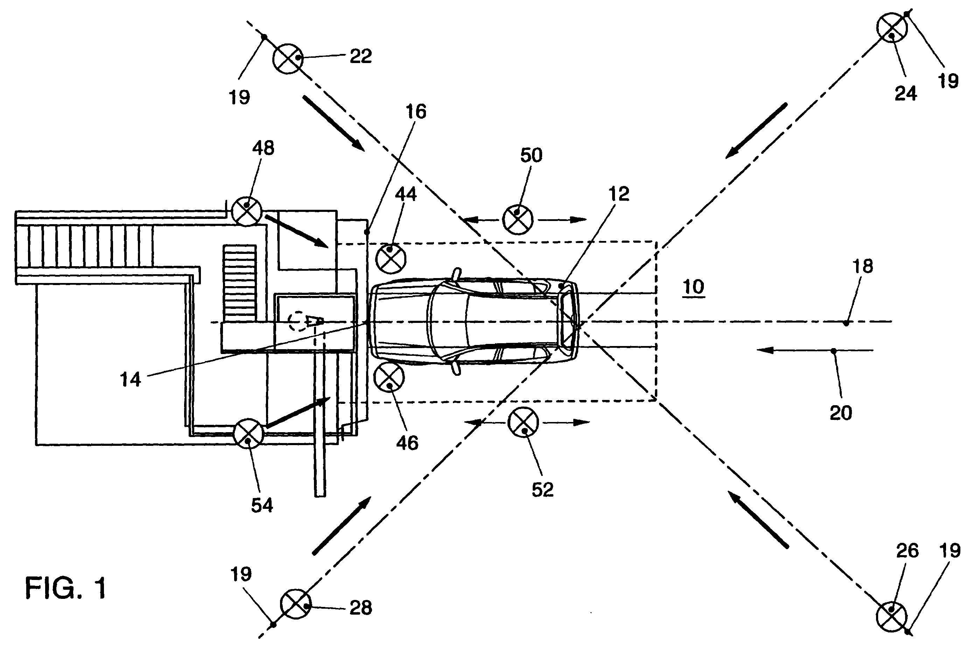

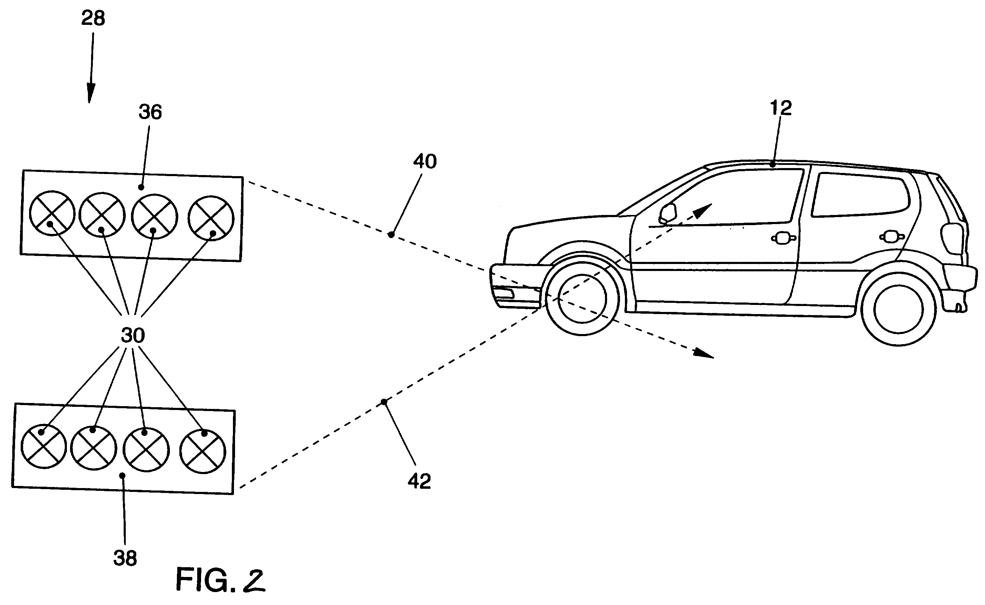

Die in den Fig. 1 und 2 dargestellte bevorzugte Ausführungsform einer erfindungsgemäßen Simulationsanordnung umfaßt eine Fahrbahn 10, auf der ein Crashfahrzeug 12 auf einen Kollisionspunkt 14 hin bewegbar ist. An dem Kollisionspunkt 14 ist beispielhaft ein Hindernis 16 dargestellt (Fig. 1). Die nachfolgenden Erläuterungen beziehen sich beispielhaft auf diese Situation eines Frontalcrashes des Crashfahrzeuges 12 auf ein Hindernis, diese sind jedoch ohne Einschränkungen auf andere Gegebenheiten, wie einen Heck-/Seiten- oder Fahrzeug-Fahrzeug-Crash übertragbar.

Das Fahrzeug bewegt sich auf der Fahrbahn 10 zumindest kurz vor dem Aufprall auf das Hindernis 16 entlang einer Hauptbewegungsachse 18 in eine Fahrtrichtung 20 (Fig. 1). Benachbart zur oder direkt auf der Hauptbewegungsachse 18 sind in Fahrtrichtung 20 gesehen vor und hinter dem Kollisionspunkt 14 auf jeweiligen Diagonalen 19 zur Hauptbewegungsachse 18 Leuchtmittel 22, 24, 26 und 28 mit jeweils mehreren einzelnen Beleuchtungskörpern angeordnet. Hierbei sind die Leuchtmittel 22, 24, 26 und 28 derart angeordnet und ausgerichtet, daß sie einen Kollisionsbereich um den Kollisionspunkt 14 herum im wesentlichen entlang einer jeweiligen Diagonalen 19 bezüglich der Hauptbewegungsachse 18 14 ausleuchten.

Die Leuchtmittel 22, 24, 26 und 28 befinden sich außerhalb aller Kamerablickfelder, indem sie in Fahrtrichtung 20 gesehen bezüglich des Kollisionspunktes 14 hinreichend weit schräg vor und schräg hinter dem Fahrzeug 12 bzw. dem Kollisionspunkt 14 angeordnet sind. Diese Art der Positionierung kommt auch den Anforderungen an eine gute Zugänglichkeit des Crashraums für Vorbereitungs- und Bergungsphase zugute, wo entsprechende Bewegungsräume für Bergungseinrichtungen, wie beispielsweise einen Kranwagen, erforderlich sind.

Die Strahlengänge solchermaßen positionierter Leuchtmittel 22, 24, 26 und 28 überdecken das Fahrzeug 12 in den jeweiligen Diagonalrichtungen 19. Sie können hier ohne Blendgefahr beliebig tief positioniert werden, so daß Dummy-Kopf-Abschattungen durch die Fahrzeugdachholme vermieden und auch die mittleren Sitzpositionen gut ausgeleuchtet sind.

Abschattungen durch A-, B- und C-Säulen sind wegen der Zweipunktausleuchtung jeder Fahrzeugseite (schräg vom, schräg hinten) relativ gering und können weiter minimiert werden, wenn das jeweilige Leuchtmittel 22, 24, 26 und 28 nicht aus einem einzigen Punktstrahler, sondern aus mehreren flächig neben- und übereinander verteilten Beleuchtungskörpern 30 besteht (Fig. 3), deren Lichtverteilungskurven sich im Zielbereich überschneiden. Auf diese Art und Weise kommt es zu einer weiteren Aufweichung des Schattenfalls.

Die Einzelscheinwerfer 30 jeder Diagonalgruppe 22, 24, 26 und 28 werden zweckmäßigerweise so ausgerichtet, daß aus jeder einzelnen Diagonalposition die gesamte jeweilige Fahrzeugseite ausgeleuchtet wird. Besonders geeignet ist dabei die Verwendung von Scheinwerfern 30, deren Lichtverteilungscharakteristik sich nachträglich durch Vorsatzlinsen verändern läßt so daß von jeder Diagonalgruppe aus auch in den weiter entfernten Fahrzeugpartien die gleiche Beleuchtungsstärke erreicht wird, wie in den der jeweiligen Ausleuchtungsgruppe 22, 24, 26 und 28 näher gelagerten Partien. Ziel bei der Beeinflussung der Lichtverteilungskurven durch Vorsatzlinsen ist es, eine Ausleuchtungsfeldgröße jedes Einzelscheinwerfers 30 bezogen auf das ausgeleuchtete Fahrzeuglängssegment gleich groß zu halten.

Da die Fahrzeugseitenflächen i.a. nahezu parallel zur Fahrtrichtung ausgerichtet sind, d.h. keine nennenswerte Wölbung um eine Fahrzeughochachse aufweisen, können keine großflächigen Reflexionen auftreten, die sich unter Berücksichtigung des Reflexionsgesetzes Ausfallswinkel = Einfallswinkei in entsprechenden Kamerastandpunkten bemerkbar machen könnten.

Bei Fahrzeugen mit in Fahrzeugquer- und ggf. auch in -längsrichtung stärker gewölbter Motorhaube können Reflexionen in einem Grenzkantenbereich auftreten, die aber ebenfalls nur eine kleine Fläche haben. Sie lassen sich ganz vermeiden, indem, wie in Fig. 3 dargestellt, beispielsweise die vorderen Beleuchtungsfelder 22, 28 jeweils in zwei Horizontalpaneele 36, 38 unterteilt werden, deren unteres unterhalb einer höchsten Motorhaubengrenzlinie und deren oberes so hoch positioniert wird, daß keine Reflexionen mehr in Richtung Kameras auftreten können. Für die Ausrichtung der Paneele 36, 38 gilt dann, daß das untere Paneel die oberen Fahrzeugstrukturen und das obere die unteren Fahrzeugstrukturen in der Art kreuzweiser Strahlengänge 40 und 42 beleuchtet.

Die durch die tiefliegende Diagonalausleuchtung ggf. unterrepräsentierte Fahrzeug-Dachflächen- und Motorhaubenausleuchtung wird durch optionale zusätzliche Leuchtmittel 44, 46 von schräg seitlich oben optimiert, deren Winkel zur Fahrzeugseitenfläche steil genug sind, um Reflexionen in Richtung der seitlichen Kameras zu vermeiden, wobei deren Winkel zu einer Fahrzeugfrontscheibe flach genug ist, um Reflexionen in Richtung der schräg von vom eingerichteten Kamera sowie in Richtung der oben montierten Übersichtskamera zu vermeiden.

Für die schräg seitlich von oben in den Fahrzeuginnenraum blickende Kamera wird jeweils ein zusätzliches Leuchtmittel 48, 50, 52 und 54 seitlich oberhalb beispielsweise an einer Hallendecke angeordnet, die weit oberhalb der Kamera sitzend und etwas seitlich versetzt genau in Richtung des Kamerablickwinkels orientiert ist. Der seitliche Versatz vermeidet einen Schattenwurf vom Kameragehäuse auf bildrelevante Teile. Die zusätzlichen Leuchtkörper 48 und 54 dienen dabei dazu, einen Unterkörperbereich von Fahrer-Dummies durch eine Windschutzscheibe hindurch aufzuhellen.

In der beschriebenen Ausführung kann die Beleuchtung einmal so eingerichtet und fixiert werden, daß sie für alle im Auslegungszeitpunkt bekannte Arten von Crashfahrzeugen und Crasharten geeignet ist, ohne daß spezifische Nachstellarbeiten oder gar motorische Verfahreinrichtungen erforderlich wären. Für den Fall, daß die seitlich in den Fahrzeuginnenraum blickende Kamera in Fahrzeuglängsachse verfahrbar sein soll, ist in vorteilhafter Weise ebenfalls eine Längsverfahrbarkeit des zugehörigen Scheinwerfers vorgesehen, die vorzugsweise durch eine direkte mechanische Kopplung einer Scheinwerferaufhängung mit einem verfahrbaren Kamerateleskop realisiert ist. Alternativ ist eine Integration von Scheinwerfer- und Kamerateleskop-Verfahreinrichtung auf dasselbe Trägersystem ausgebildet.

Die Leuchtmittel 22, 24, 26 und 28 sind auch als Hauptscheinwerfer zu bezeichnen und sind bei Sicht von oben auf das Crashfahrzeug, wie in Fig. 1 dargestellt, vorn links, hinten links, vorn rechts und hinten rechts angeordnet. Sie bestrahlen das Crashfahrzeug 12 jeweils in diagonaler Richtung 19. Jede Scheinwerfergruppe 22, 24, 26 und 28 ist nicht unter einer Hallendecke montiert, sondern in einer mittleren Höhe von ca. 120 cm über einem Boden bzw. der Fahrbahn 10. Dies erzielt eine gute Kopfausleuchtung. Die Scheinwerfergruppen 22, 24, 26 und 28 sind in vorteilhafter Weise als Flächenstrahler mit vielen Einzelscheinwerfern 30 (Fig. 3) ausgebildet, um Abschattungen durch vorgelagerte Strukturteile des Crashfahrzeuges 12, wie beispielsweise die B-Säule, zu vermeiden bzw. aufzuweichen.

Die in Fig. 2 dargestellte Einteilung in ein unteres Paneel 38 und ein oberes Paneel 36 mit sich in der Höhe überkreuzenden Strahlengängen 40, 42 sorgt für eine gute Ausleuchtung im Kopf- und Himmelbereich des Crashfahrzeuges 12 und läßt die Strahlengänge an gewölbten Fronthauben oder Kotflügeln steiler nach oben reflektieren, ohne eine gegenüberliegende Kamera zu blenden.

Je mehr Einzelscheinwerfer 30 auf großer Fläche verteilt sind, wie in Fig. 3 dargestellt, desto geringer ist eine Abschattung hinter Strukturteilen, wie beispielsweise A-Säule oder B-Säule oder C-Säule, da sich die jeweiligen Strahlengänge der Einzelscheinwerfer 30 überlappen und ggf. nicht exakt parallel zueinander ausgerichtet sind, so daß ein Einzelscheinwerfer 30 in einen Schattenbereich hinter einem Strukturteil eines anderen, beispielsweise benachbarten Einzelscheinwerfers 30, strahlt.

### BEZUGSZEICHENLISTE

- 10: Fahrbahn
- 12: Fahrzeug
- 14: Kollisionspunkt
- 16: Hindernis
- 18: Hauptbewegungsachse
- 19: Diagonale
- 20: Fahrtrichtung
- 22: Leuchtmittel
- 24: Leuchtmittel
- 26: Leuchtmittel
- 28: Leuchtmittel
- 30: Beleuchtungskörper
- 32: Lichtstrahl
- 34: Kamera
- 36: Horizontalpaneel
- 38: Horizontalpaneel
- 40: Strahlengänge
- 42: Strahlengänge
- 44: zusätzliches Leuchtmittel
- 46: zusätzliches Leuchtmittel
- 48: zusätzliches Leuchtmittel
- 50: zusätzliches Leuchtmittel
- 52: zusätzliches Leuchtmittel
- 54: zusätzliches Leuchtmittel

## Patentansprüche

1. Simulationsanordnung für Kraftfahrzeugunfälle mit einer Fahrbahn (10), auf der wenigstens ein Crashfahrzeug (12) auf einen Kollisionspunkt (14) mit einem Hindernis (16) oder einem anderen Fahrzeug zubewegbar ist, wobei Leuchtmittel zum Ausleuchten eines Kollisionsbereiches des Kollisionspunktes (14) vorgesehen sind,
dadurch gekennzeichnet, daß
wenigstens ein Leuchtmittel (22,24,26,28) auf wenigstens einer Diagonale (19) zu einer Hauptbewegungsachse (18) des Crashfahrzeuges (12) vor und/oder hinter dem Kollisionspunkt (14) angeordnet und auf den Kollisionsbereich hin ausgerichtet angeordnet ist, wobei die Diagonale (19) das Crashfahrzeug (12) in dessen Position am Kollisionspunkt (14) und/oder das Hindernis (16) bzw. Fahrzeug schneidet.

2. Simulationsanordnung nach Anspruch 1,
dadurch gekennzeichnet, daß
das wenigstens eine Leuchtmittel (22,24,26,28) in einer Höhe von 0 cm bis 150 cm, insbesondere 120 cm, über der Fahrbahn (10) angeordnet ist.

3. Simulationsanordnung nach Anspruch 1 oder 2,
dadurch gekennzeichnet, daß
die wenigstens eine Diagonale (19) einen Winkel von 40 Grad bis 50 Grad, insbesondere 45 Grad, mit der Hauptbewegungsachse (20) des Crashfahrzeuges (12) einschließt.

4. Simulationsanordnung nach einem der vorhergehenden Ansprüche,
dadurch gekennzeichnet, daß
die wenigstens eine Diagonale (19) das Crashfahrzeug in dessen Position am Kollisionspunkt mittig schneidet.

5. Simulationsanordnung nach einem der vorhergehenden Ansprüche,
dadurch gekennzeichnet, daß
jeweils wenigstens ein Paar Leuchtmittel (22,26 bzw. 24,28) an gegenüberliegenden Enden einer Diagonale (19) vor und hinter dem Kollisionspunkt (14) angeordnet ist.

6. Simulationsanordnung nach einem der vorhergehenden Ansprüche,
dadurch gekennzeichnet, daß
das wenigstens eine Leuchtmittel (22,24,26,28) mehrere, individuell einstellbare Beleuchtungskörper (30) umfaßt.

7. Simulationsanordnung nach einem der vorhergehenden Ansprüche,
dadurch gekennzeichnet, daß
wenigstens ein Leuchtmittel (22,24,26,28) in zwei horizontale Paneele (36,38) geteilt ist.

8. Simulationsanordnung nach einem der vorhergehenden Ansprüche,
dadurch gekennzeichnet, daß
oberhalb und/oder schräg seitlich bezüglich des Kollisionspunktes (14) zusätzliche Leuchtmittel (44,46,48,50,52,54) angeordnet sind.

9. Simulationsanordnung nach einem der vorhergehenden Ansprüche,
dadurch gekennzeichnet, daß
für eine schräg seitlich von oben in den Fahrzeuginnenraum blickende Kamera wenigstens ein Leuchtmittel (50,52) seitlich oberhalb dieser Kamera und bzgl. dieser seitlich versetzt und in Richtung eines Kamerablickwinkels ausgerichtet angeordnet ist.

10. Simulationsanordnung nach einem der vorhergehenden Ansprüche,
dadurch gekennzeichnet, daß
wenigstens eines der Leuchtmittel (22,24,26,28,44,46,48,50,52,54) in seiner Position verfahrbar angeordnet ist.

11. Verfahren zur Simulation von Kraftfahrzeugunfällen, wobei wenigstens ein Crashfahrzeug auf einer Fahrbahn auf einen Kollisionspunkt mit einem Hindernis oder einem anderen Fahrzeug zubewegt wird,
dadurch gekennzeichnet, daß
der Kollisionspunkt Diagonal zu einer Hauptbewegungsachse des Crashfahrzeuges vor und/oder hinter dem Kollisionspunkt von wenigstens einem Leuchtmittel ausgeleuchtet wird.

12. Verfahren nach Anspruch 11,
dadurch gekennzeichnet, daß
wenigstens ein Leuchtmittel mit mehreren Beleuchtungskörpern verwendet wird, wobei die Beleuchtungskörper derart eingestellt werden, daß sich deren Lichtverteilungskurven in einem Zielbereich überschneiden.

13. Verfahren nach Anspruch 11 oder 12,
dadurch gekennzeichnet, daß
wenigstens vor einem Beleuchtungskörper eine Vorsatzlinse angeordnet wird.

14. Verfahren nach einem der Ansprüche 11 bis 13,
dadurch gekennzeichnet, daß
der Kollisionspunkt zusätzlich von oberhalb und/oder schräg seitlich ausgeleuchtet wird.

15. Verfahren nach einem der Ansprüche 11 bis 14,
dadurch gekennzeichnet, daß
das wenigstens eine Leuchtmittel in einer Höhe von 0 cm bis 150 cm, insbesondere 120 cm, über der Fahrbahn angeordnet wird.

16. Verfahren nach einem der Ansprüche 11 bis 15,
dadurch gekennzeichnet, daß
die Ausleucht-Diagonale einen Winkel von 40 Grad bis 50 Grad, insbesondere 45 Grad, mit der Hauptbewegungsachse des Crashfahrzeuges einschließt.

17. Verfahren nach einem der Ansprüche 11 bis 16,
dadurch gekennzeichnet, daß
die wenigstens eine Ausleucht-Diagonale das Crashfahrzeug in dessen Position am Kollisionspunkt mittig schneidet.

18. Verfahren nach einem der Ansprüche 11 bis 17,
dadurch gekennzeichnet, daß
jeweils wenigstens ein Paar Leuchtmittel an gegenüberliegenden Enden einer Diagonale vor und hinter dem Kollisionspunkt angeordnet wird.

19. Verfahren nach einem der Ansprüche 11 bis 18,
dadurch gekennzeichnet, daß
der Kollisionsbereich zusätzlich von oberhalb und/oder schräg seitlich bezüglich des Kollisionspunktes ausgeleuchtet wird.

20. Verfahren nach einem der Ansprüche 11 bis 16,
dadurch gekennzeichnet, daß
der Kollisionsbereich zusätzlich von seitlich oberhalb und seitlich versetzt einer schräg seitlich von oben in den Fahrzeuginnenraum blickenden Kamera aus ausgeleuchtet wird
